# EUROPEAN PATENT SPECIFICATION

(11) **EP 2 732 885 B1**
(45) Date of publication and mention of the grant of the patent: **16.03.2016**
(21) Application number: 12836745.5
(22) Date of filing: 29.08.2012
(51) Int. Cl.: B08B 3/02, A01K 61/00, B63B 59/06, B05B 3/06, B05B 9/00, A01K 75/00, B08B 9/08

(54) **SUBMERSIABLE CLEANING ROBOT**
UNTERWASSERREINIGUNGSROBOTER
ROBOT DE NETTOYAGE SOUS L'EAU

(30) Priority: 27.09.2011 JP 2011210802
(43) Date of publication of application: 21.05.2014
(73) Proprietor: Yanmar Co., Ltd., Osaka-shi, Osaka 530-8311 (JP)
(72) Inventor: OSAKA Takitaro, Itami-shi Hyogo 664-0851 (JP); HIRATA Daisuke, Itami-shi Hyogo 664-0851 (JP)
(74) Representative: Hinkelmann, Klaus
(86) International application number: PCT/JP2012/071828
(87) International publication number: WO 2013/047061

(56) References cited:
- WO-A1-2010/040171
- JP-A- H08 107 735
- JP-A- H08 318 229
- JP-A- 2001 276 754

## Description

### Technical Field

The present invention relates to a submersible cleaning robot that cleans cleaning subject items such as aquaculture fish nets by jetting high-pressure water.

### Background Art

Submersible cleaning robots for, for example, removing seaweed, algae, and shellfish that have become attached to aquaculture fish nets are known. Such a submersible cleaning robot cleans a cleaning subject item while moving along a submerged surface of the cleaning subject item by jetting high-pressure water from a cleaning nozzle unit toward this surface of the cleaning subject item. The cleaning nozzle unit is mounted on a rotating shaft that is provided rotatably on a robot body and rotates integrally with this rotating shaft due to a reaction force of the jetting of high-pressure water at the surface of the cleaning subject item.

Furthermore, a propeller that generates a propulsion force for pushing the robot body against the surface of the cleaning subject item by rotating pursuant to rotation of the rotating shaft is mounted on this rotating shaft. Also, water is introduced toward the propeller that is rotated, producing a water current that blows to the outside of the submersible cleaning robot, and thus a propulsion force is obtained in the submersible cleaning robot, and a state is maintained in which the submersible cleaning robot makes contact with the aquaculture fish net with a predetermined force.

Since the aquaculture fish net includes ropes (fish net ropes), the aquaculture fish net bends and protrudes largely upward at parts where the fish net ropes exist. When the submersible cleaning robot intends to pass over such a protrusion, the nozzle gets tangled in the aquaculture fish net or the fish net rope, or the robot body runs on the protrusion. Thus, it is difficult for the submersible cleaning robot to pass over the protrusion to continue to travel.

The submersible cleaning robot is known which includes auxiliary roller devices at respective lower portions of both left and right sides of the robot body so that the submersible cleaning robot can pass over the protrusion and can continue to travel (see, for example, Patent Document 1).

Also, the submersible cleaning robot is proposed in which the plurality of cleaning nozzle units is disposed in the left and right direction of the robot body so as to clean the surface of the cleaning subject item efficiently over a wide range.

### Patent Art Reference

### Patent Document

[Patent Document 1] JP H08-318229 A discloses an apparatus in accordance with the preamble of claims 1 and 2.

### Summary of the Invention

### Problems to be Solved by the Invention

The fish net ropes include ropes made by intersecting a longitudinal rope along the traveling direction of the submersible cleaning robot and a lateral rope that is perpendicular to the traveling direction of the submersible cleaning robot. Furthermore, when the fish net ropes are provided in parallel in one direction, they are longitudinal ropes or lateral ropes relative to the submersible cleaning robot depending on the traveling direction of the submersible cleaning robot.

The submersible cleaning robot recited in Patent Document 1 has a configuration in which an auxiliary roller device is provided between the front and rear wheels. Thus, such a submersible cleaning robot can pass over the lateral rope, but cannot pass over the longitudinal rope located between the left and right wheels.

In particular, in the submersible cleaning robot that includes the plurality of cleaning nozzle units as described above, the wheel width in the left and right direction of the robot body (the distance between the wheels) is widened. Thus, if there is an obstacle such as a net and a longitudinal rope beneath the robot, such obstacle makes contact with the bottom surface of the robot body, thereby it is difficult to continue a travel.

The present invention was made to solve the above problem, and an object thereof is to provide the submersible cleaning robot that can travel without getting tangled in and can pass over the protrusion of the cleaning subject item e.g. the fish net, and to improve the cleaning ability.

### Means for Solving Problem

A submersible cleaning robot of the present invention was made to solve the above problem. The submersible cleaning robot is to clean a submerged cleaning subject item by jetting high-pressure water from a cleaning nozzle provided in a cleaning nozzle unit toward a surface of the cleaning subject item while moving along the surface of the cleaning subject item. The cleaning nozzle unit is rotatably provided in a lower portion of a robot body. A traveling device is provided to move the robot body. The traveling device includes first travel units that are provided at left and right sides of the robot body, and the second travel units that are located higher than lower ends of the first travel units. The second travel units includes front and rear second travel units that are provided in the robot body in a front and rear direction so as to face the respective inner sides in the left and right direction of the robot body compared to the first travel units. The first travel units and the second travel units are driven to rotate in the same direction.

With the present invention as described above, it is possible to improve traveling performance relative to both ropes in the longitudinal direction and the lateral direction, thus the cleaning can be performed efficiently and stably over a wide range.

In the submersible cleaning robot, it is preferable that the front and rear second travel units have a smaller diameter than a diameter of the first travel units and a length of the front and rear second travel units in the left and right direction of the robot body is set to be longer than a length of the first travel units in the left and right direction of the robot body. In this case, since it is possible to travel by the first travel units, a good turning performance can be maintained.

In the submersible cleaning robot, the second travel units may include left and right second travel units that are provided at the left and right sides of the robot body. In this case, the left and right second travel units can reliably travel relative to the rope in the lateral direction, thus traveling performance can be improved.

In the submersible cleaning robot, the left and right second travel units may be constituted by respective endless tracks or a plurality of wheels.

In the submersible cleaning robot, the front and rear second travel units may be formed in a tapered shape so as to have a diameter that becomes smaller toward the center of the robot body. Like this, when the second travel units are formed in the tapered shape, parts of the surface of the cleaning subject item such as an aquaculture fish net that make contact with the second travel units are drawn toward the larger diameter parts of the second travel units. Accordingly, it is possible that the cleaning subject item is tensioned, thus the submersible cleaning robot can travel easier.

In the submersible cleaning robot, axes of the first travel units and the associated left and right second travel units that serve as the endless tracks may be provided on the same axes, and an external diameter of the first travel units may be set to be larger than an external diameter of the endless tracks. In this case, the submersible cleaning robot can travel by the first travel units, thus the endless tracks have little chance to prevent the travel.

Another submersible cleaning robot no longer claimed in the present invention is to clean a submerged cleaning subject item by jetting high-pressure water from a cleaning nozzle provided in a cleaning nozzle unit toward a surface of the cleaning subject item while moving along the surface of the cleaning subject item. The cleaning nozzle unit is rotatably provided in a lower portion of a robot body. A traveling device is provided to move the robot body. The traveling device includes first travel units provided at left and right sides of the robot body, and second travel units provided in a front and rear direction of the first travel units. A length of the second travel units in the left and right direction of the robot body is set to be longer than a length of the first travel units in the left and right direction of the robot body. The first travel units and the second travel units are driven to rotate in the same direction.

With the present invention as described above, it is possible to improve traveling performance relative to both ropes in the longitudinal direction and the lateral direction, thus the cleaning can be performed efficiently and stably over a wide range.

### Effect of the Invention

In the present invention, even if the surface of the cleaning subject item such as a fish net extends across a wide area, it is possible that the submersible cleaning robot stably travels relative to undulation and sag of the surface of the cleaning subject item, thus efficiently performs the cleaning.

### Brief Description of Drawings

[FIG. 1] FIG. 1 is a schematic plain view of a submersible cleaning robot including a partial cross-section thereof according to one embodiment of the present invention.
[FIG. 2] FIG. 2 is a side view of the submersible cleaning robot.
[FIG. 3] FIG. 3 is a front view of the submersible cleaning robot.
[FIG. 4] FIG. 4 is a perspective view of the submersible cleaning robot.
[FIGS. 5] FIG.5(a) is a plain view showing a cleaning state of the submersible cleaning robot, and FIG. 5(b) is a side view showing the cleaning state of FIG. 5(a).
[FIGS. 6] FIG. 6(a) is a plain view showing a cleaning state of the submersible cleaning robot, and FIG. 6(b) is a back view showing the cleaning state of FIG. 6(a).
[FIGS. 7] FIG. 7(a) is a plain view showing another embodiment of the present invention, and FIG. 7(b) is a side view showing the embodiment of FIG. 7(a).
[FIGS. 8] FIG. 8(a) is a plain view showing another embodiment of the present invention, and FIG. 8(b) is a side view showing the embodiment of FIG. 8(a).
[FIGS. 9] FIG. 9(a) is a plain view showing another embodiment of the present invention, and FIG. 9(b) is a side view showing the embodiment of FIG. 9(a).
[FIGS. 10] FIG. 10(a) is a plain view showing another embodiment of the present invention, and FIG. 10(b) is a side view showing the embodiment of FIG. 10(a).
[FIGS. 11] FIG. 11(a) is a plain view showing another embodiment of the present invention, and FIG. 11(b) is a cross-sectional view showing a main part of the embodiment of FIG. 11(a).
[FIGS. 12] FIG. 12(a) is a plain view showing another embodiment of the present invention, and FIG. 12(b) is a side view showing the embodiment of FIG. 12(a).
[FIGS. 13] FIG. 13(a) is a plain view showing another embodiment of the present invention, and FIG. 13(b) is a side view showing the embodiment of FIG. 13(a).

### Modes for Carrying out the Invention

Hereinafter, specific embodiments of the present invention will be described with reference to the drawings.

In this embodiment, a case is described in which the present invention is applied as a self-propelled submersible cleaning robot for cleaning an aquaculture fish net.

### -Configuration of Submersible Cleaning Robot-

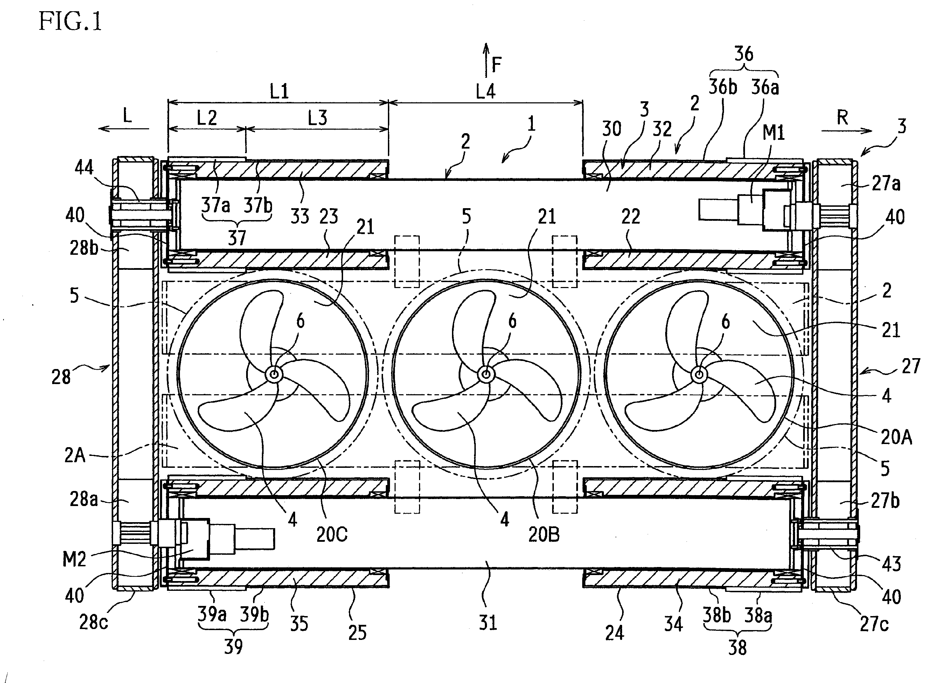

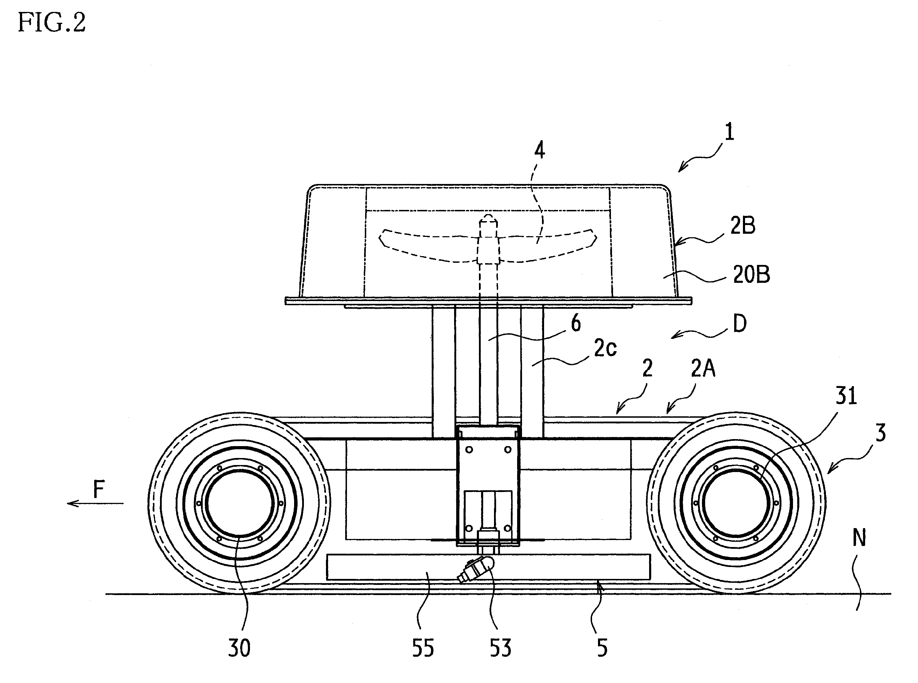

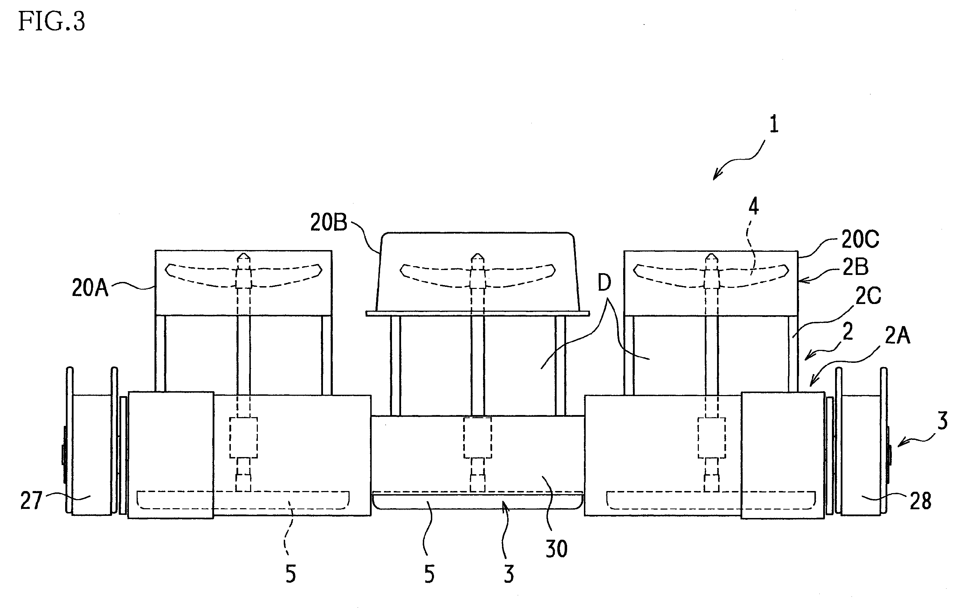

FIGS. 1 to 6 show a submersible cleaning robot 1 according to an embodiment of the present invention. The submersible cleaning robot 1 according to the present embodiment includes, as shown in FIGS. 1 to 4, a robot body 2, a cleaning nozzle unit 5 and a propulsion force-generating propeller 4 (hereinafter simply referred to as a "propeller").

The robot body 2 includes a nozzle side body 2A disposed in a lower side, a propeller side body 2B disposed in an upper side, and connecting bodies 2C that connect these bodies to each other.

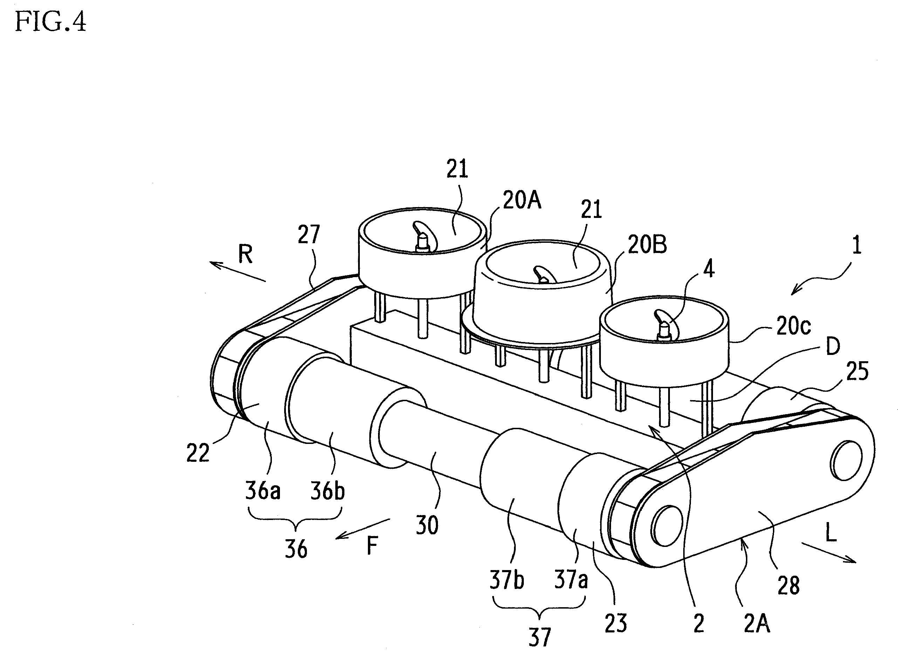

In FIGS. 1 and 4, an arrow F shows a front direction of the submersible cleaning robot 1. Also, an arrow R shows the right side of the front direction of the submersible cleaning robot 1, and an arrow L shows the left side thereof.

The propeller side body 2B includes a plurality of propeller covers 20A, 20B and 20C each have relatively large diameter opening 21 (in the present embodiment, three (3) openings 21 are exemplarily shown). The opening 21 is in communication with an introduction space D. Propeller covers 20A, 20B and 20C are provided in the left and right direction (width direction) of the robot body 2. In each opening 21, the corresponding propeller 4 is housed.

A traveling device 3 is provided in the nozzle side body 2A. The traveling device 3 includes submersible motors M1 and M2 with speed reducers, four (4) wheels (left and right front and rear wheels) 22, 23, 24 and 25, and a left and right pair of endless tracks (crawlers) 27 and 28.

At the front and rear portions of the nozzle side body 2A, front and rear shafts 30 and 31 having a cylinder shape are provided parallel to the left and right direction, and the submersible motor M1 is embedded in one end portion of the front shaft 30 at the right side and the submersible motor M2 is embedded in the opposite end portion of the rear shaft 31 at the left side.

The wheels 22 to 25 includes, respectively, cylindrical rotating bodies 32, 33, 34 and 35 that are rotatably fitted onto both sides of the front and rear shafts 30 and 31, and tires 36, 37, 38 and 39 as elastic bodies that are mounted on respective outer peripheral surfaces of the cylindrical rotating bodies 32, 33, 34 and 35. The tires 36, 37, 38 and 39, which have a shape of a cylinder, include, respectively, first travel units 36a, 37a, 38a and 39a each have a large diameter and front and rear second travel units 36b, 37b, 38b and 39b each have a smaller diameter than the first travel units. The first travel units 36a, 37a, 38a and 39a are disposed at respective outer sides in the left and right direction of the robot body 2, and the front and rear second travel units 36b, 37b, 38b and 39b are disposed so as to face the respective inner sides in the left and right direction of the robot body 2. Thus, since the front and rear second travel units 36b, 37b, 38b and 39b are formed so as to have a smaller diameter than the first travel units, the respective lower ends of the front and rear second travel units 36b, 37b, 38b and 39b are located higher than the lower ends (ground contact surfaces) of the first travel units 36a, 37a, 38a and 39a.

Here, a length (a wheel width) L1 of each of the wheels 22 to 25, a length L2 of each of the first travel units 36a, 37a, 38a and 39a (a width of the first travel unit), and a length L3 of each of the front and rear second travel units 36b, 37b, 38b and 39b (a width of the second travel unit) can be arbitrary set. For example, the wheel width L1 is preferably set to one-third or more of the size of the robot body 2 in the left and right direction. Thus, by setting the wheel width L1, a distance between the left and right wheels L4 can be set to smaller than that of the conventional submersible cleaning robot that includes a single cleaning nozzle unit.

The length of each of the first travel units L2 is set to be shorter than the length of each of the front and rear second travel units L3. That is, the length of each of the first travel units L2 is set to the length corresponding to the width of the wheel of the conventional submersible cleaning robot. Thus, the length of each of the first travel units L2 is set to be shorter than the length of each of the front and rear second travel units L3, thereby a ground connection length of each of the first travel units becomes short. Therefore, a good turning traveling performance is obtained.

At end portions of the cylindrical rotating bodies 32, 33, 34 and 35, respective rotating plates 40 are fixed. The rotating shaft of the submersible motor M1 is inserted into, and further interlocked and connected to, the rotating plate 40 fixed to the cylindrical rotating body 32 of the right front wheel 22. Therefore, the submersible motor M1 drives the right front wheel 22 to rotate.

The rotating shaft of the submersible motor M2 is inserted into, and further interlocked and connected to, the rotating plate 40 fixed to the cylindrical rotating body 35 of the left rear wheel 25. Therefore, the submersible motor M2 drives the left rear wheel 25 to rotate.

At the outside of the wheels 22 to 25 in the left and right direction, the crawlers 27 and 28 are provided as the left and right second travel units. The second travel units are constituted by the left and right second travel units (crawlers 27 and 28) and the front and rear second travel units 36b, 37b, 38b and 39b.

The right crawler 27 includes a drive wheel 27a fixed to the rotating shaft of the submersible motor M1, a driven wheel 27b supported by a rotating shaft 43 that is integrally rotated with the rotating plate 40 fixed to the right rear cylindrical rotating body 34, and a circular shaped endless belt (crawler belt) 27c wound between the drive wheel 27a and the driven wheel 27b. Thus, in the crawler 27, when the crawler belt 27c is rotated by a rotation of the submersible motor M1, the right rear cylindrical rotating body 34 is caused to simultaneously rotate. That is, in the submersible motor M1, the right front and rear wheels 22 and 24, and the crawler 27 are simultaneously rotated about the same axes in the same direction.

The left crawler 28 includes a drive wheel 28a fixed to the rotating shaft of the submersible motor M2, a driven wheel 28b supported by a rotating shaft 44 that is integrally rotated with the rotating plate 40 fixed to the left front cylindrical rotating body 33, and a crawler belt 28c wound between the drive wheel 28a and the driven wheel 28b. Thus, in the crawler 28, when the crawler belt 28c is rotated by a rotation of the submersible motor M2, the left front cylindrical rotating body 33 is caused to simultaneously rotate. That is, in the submersible motor M2, the left front and rear wheels 23 and 25, and the crawler 28 are simultaneously rotated about the same axes in the same direction.

Here, the external diameter of the first travel units 36a, 37a, 38a and 39a is set to be larger than the external diameter of the crawler belts 27c and 28c of the crawlers 27 and 28. Thus, the lower ends (ground contact surfaces) of the crawler belts 27c and 28c of the crawlers 27 and 28 are located higher than the lower ends of the first travel units 36a, 37a, 38a and 39a. Therefore, a normal travel can be performed by the first travel units 36a, 37a, 38a and 39a.

A power supply cable (not shown) is connected to each of the submersible motors M1 and M2. When the submersible cleaning robot 1 has been submerged in water, the power supply cable extends from a power-supply device (not shown) on land or on a boat to the submersible cleaning robot 1 and performs supply of power to each of the submersible motors M1 and M2.

If, for example, when the submersible cleaning robot 1 is in a state of forward travel (travel in the direction of the arrow F of FIG. 1), a rotation speed of the right submersible motor M1 is set to be higher than a rotation speed of the left submersible motor M2, the travel direction of the submersible cleaning robot 1 changes to face the left direction of FIG. 1 (the direction of the arrow L).

Conversely, if the rotation speed of the left submersible motor M2 is set to be higher than the rotation speed of the right submersible motor M1, the travel direction of the submersible cleaning robot 1 changes to face the right direction (the direction of the arrow R).

Even in a case wherein the submersible cleaning robot 1 is driven in reverse by rotating the submersible motors M1 and M2 in an opposite direction to that mentioned above, it is possible to change a direction of travel in the same way. In addition, if the submersible motor M1 and the submersible motor M2 are rotated in mutually opposite directions, the submersible cleaning robot 1 can be rotated.

The cleaning nozzle unit 5 is an item that jets high-pressure water supplied from a high-pressure water hose (not shown) toward an aquaculture fish net N as a cleaning subject item, and through that jetting, cleans the aquaculture fish net N. The cleaning nozzle unit 5 is mounted on a lower portion of a rotating shaft 6 rotatably supported by the nozzle side body 2A. High-pressure water pressure fed from a high-pressure pump (not shown) on land or on a boat through the high-pressure water hose is supplied to the cleaning nozzle unit 5.

The cleaning nozzle unit 5 includes a disk-shaped rotating body 55 fixed to a lower end of the rotating shaft 6 and a plurality of cleaning nozzles 53 provided on the outer periphery portion of the rotating body 55.

These cleaning nozzles 53 are inclined downward at a prescribed angle in order to orient the jetting direction of the high-pressure water toward a surface of the aquaculture fish net. As a result, in a case in which high-pressure water is jetted from the cleaning nozzles 53, the cleaning nozzle unit 5 rotates together with the rotating shaft 6 due to a jetting reaction force generated pursuant to the jetting of the high-pressure water at the surface of the aquaculture fish net. In other words, the cleaning nozzle unit 5 is configured so as to be capable of removing algae, shellfish and the like having become attached to the aquaculture fish net over a wide range by jetting high-pressure water at the surface of the aquaculture fish net N while rotating about an axis of the rotating shaft 6.

The propeller 4 is provided integrated with the rotating shaft 6, such that the propeller 4 is housed within the opening 21 of the propeller side body 2B. Accordingly, in a case in which high-pressure water is jetted from the cleaning nozzles 53, and the rotating shaft 6 rotates together with the cleaning nozzle unit 5 as a result of the jetting reaction force thereof, the propeller 4 also rotates integrally, thus generating a water flow for pushing the submersible cleaning robot 1 downward.

### -Operations of Submersible Cleaning Robot 1-

Next, description will be given on cleaning operations of the above configured submersible cleaning robot 1 on the aquaculture fish net N.

When the cleaning is performed by the submersible cleaning robot 1, the submersible cleaning robot 1 is submerged from land or a boat to an inner side (fish farming space) of the aquaculture fish net N. In addition, electrical power is supplied to each submersible motor from the power supply cable and high-pressure water is supplied to the cleaning nozzle unit 5 from the high-pressure water hose.

As a result, each of the submersible motors M1 and M2 operates and the submersible cleaning robot 1 travels along the aquaculture fish net N due to rotation of each of the wheels 22 to 25 and each of the crawlers 27 and 28.

Jetting of high-pressure water from each of the cleaning nozzles 53 of the cleaning nozzle unit 5 is carried out. As a result of the jetting of high-pressure water from the cleaning nozzles 53, algae, shellfish and the like attached to the aquaculture fish net N are removed and discharged outside the fish farming space, and the aquaculture fish net N is cleaned.

The cleaning nozzle unit 5, the rotating shaft 6, and the propeller 4 rotate integrally as a result of the jetting reaction force pursuant to the jetting of high-pressure water. Water is introduced toward the propeller 4 from the introduction space D due to this rotation of the propeller 4 and a water flow discharged from the opening 21 of each of the propeller covers 20A, 20B and 20C is generated, and a propulsion force is obtained at the submersible cleaning robot 1 and a state in which each of the wheels 22 to 25 contacts with the aquaculture fish net N at a prescribed pressure is maintained.

For this reason, there is no lifting up of each of the wheels 22 to 25 from the aquaculture fish net N, and the submersible cleaning robot 1 performs cleaning of the aquaculture fish net N while traveling stably along the aquaculture fish net N.

Since the aquaculture fish net N has flexibility, it sags downward. Specifically, when the aquaculture fish net N is large, there may be instances in which a rope forms a rib of the net. In this case, the rope portion becomes a crest, and thus undulations occur in the aquaculture fish net N. Accordingly, it is necessary for the submersible cleaning robot 1 to pass over the crest.

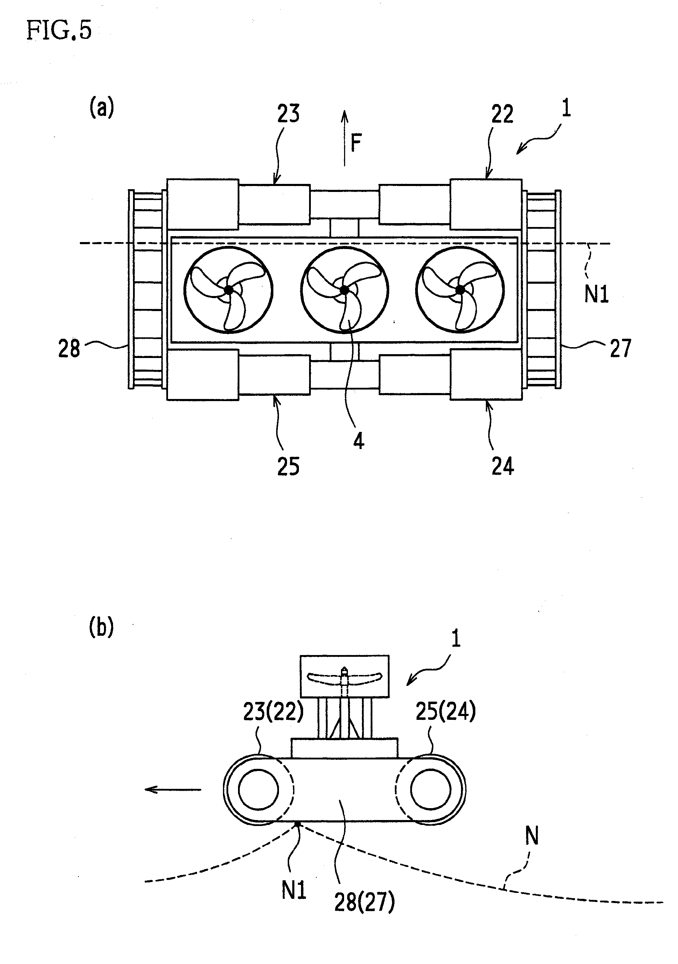

For example, FIGS. 5(a) and 5(b) indicate a case in which the submersible cleaning robot 1 travels on the crest made by a lateral rope N1. In these drawings, upon the left and right front wheels 22 and 23 pass the lateral rope N1, the crawlers 27 and 28 travel on and pass over the lateral rope N1. Then, the left and right rear wheels 24 and 25 travel on and pass over the lateral rope N1.

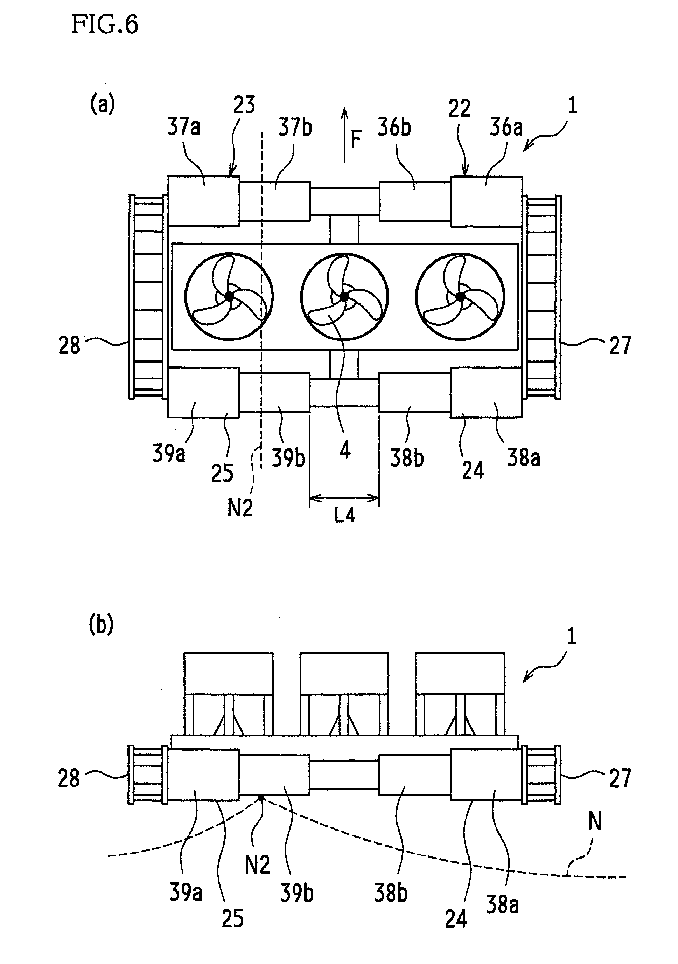

Next, FIGS. 6(a) and 6(b) indicate a case in which the submersible cleaning robot 1 travels along a longitudinal rope N2. In these drawings, the longitudinal rope N2 is straddled by the first travel units 37a and 39a of the left front and rear wheels 23 and 25, and the first travel units 36a and 38a of the right front and rear wheels 22 and 24. In this case, either of left second travel units 37b and 39b or the right second travel units 36b and 38b can travel on the longitudinal rope N2, thus the submersible cleaning robot 1 is not prevented from traveling. When the longitudinal rope N2 is located between the left second travel units 37b and 39b, and the right second travel units 36b and 38b, since the distance between the left second travel units 37b and 39b, and the right second travel units 36b and 38b (a distance L4 between the wheels) is small, any part of the wheels 22 to 25 makes contact with the aquaculture fish net N. Thus, the submersible cleaning robot 1 can pass over the longitudinal rope N2 without problems.

As described above, in any case, the submersible cleaning robot 1 can pass over a protruded cleaning portion of the aquaculture fish net N while cleaning, it is not prevented from traveling. Thus, a stable cleaning operation can be performed in a wide range at once.

In the present embodiment, the lower ends of the second travel units (the front and rear second travel units 36b, 37b, 38b and 39b and the crawlers 27 and 28) are located higher than the lower ends of the first travel units 36a, 37a, 38a and 39a, thus the travel can be performed by the first travel units. Accordingly, it is possible to maintain a good turning performance of the submersible cleaning robot 1.

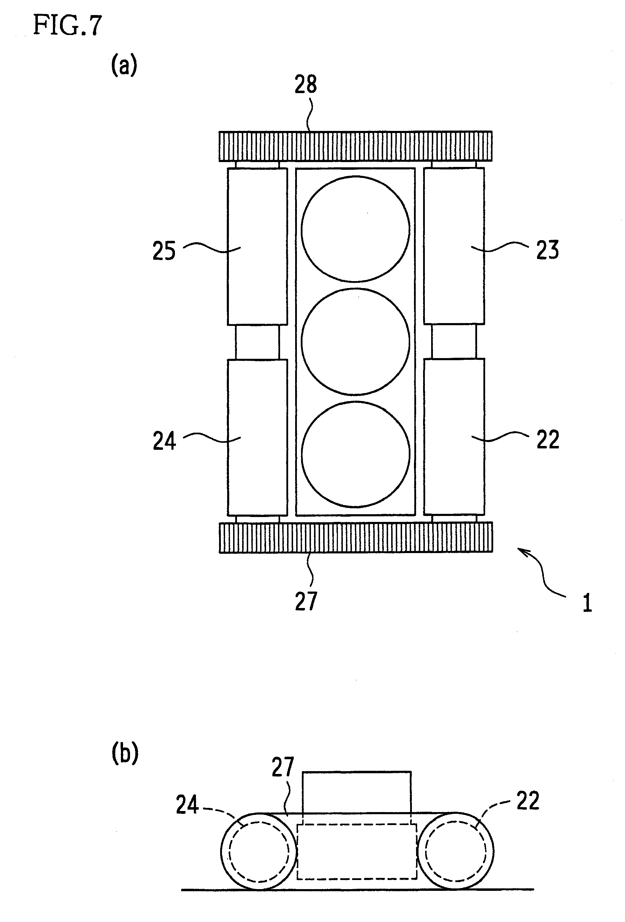

The present invention is not limited to the above described embodiment. The embodiment shown in FIGS. 7(a) and 7(b) is a case in which the wheels 22 to 25 are set to have one diameter. In the present embodiment, the external diameter of the crawlers 27 and 28 is larger than the diameter of the wheels 22 to 25. In this case, the crawlers 27 and 28 correspond to the first travel units and have a general travel function. Also, the wheels 22 to 25 correspond to the front and rear second travel units.

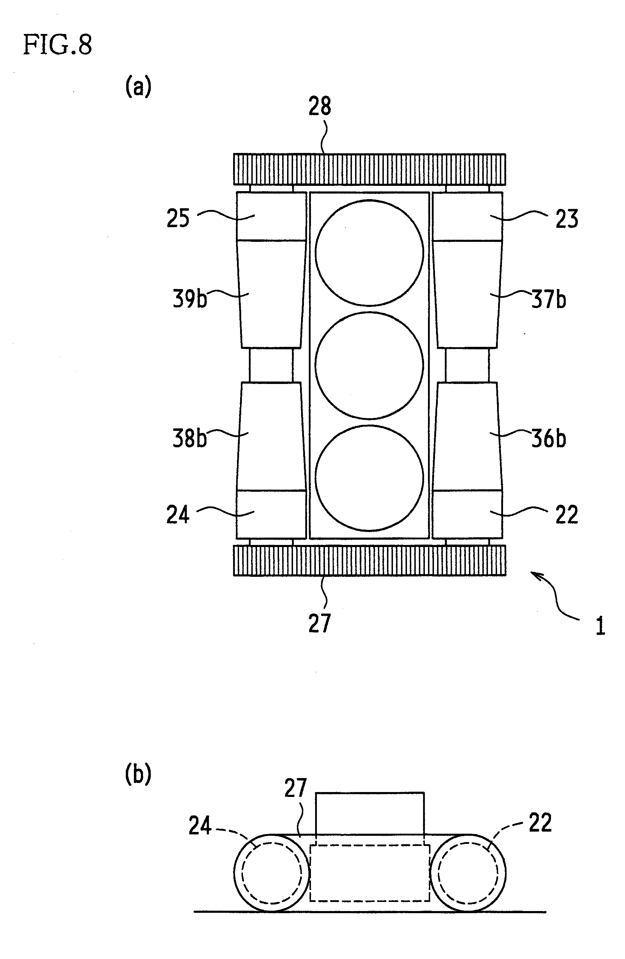

The embodiment shown in FIGS. 8(a) and 8(b) is a case in which the front and rear second travel units 36b, 37b, 38b and 39b are formed in a tapered shape so as to each have a diameter that becomes smaller toward the center of the submersible cleaning robot 1. In the case in which each of the front and rear second travel units 36b, 37b, 38b and 39b is formed in the tapered shape, parts of the aquaculture fish net N that make contact with the front and rear second travel units 36b, 37b, 38b and 39b are drawn toward the larger diameter parts of the front and rear second travel units. Accordingly, the aquaculture fish net N is caused to be tensioned, thus the submersible cleaning robot 1 can travel easier.

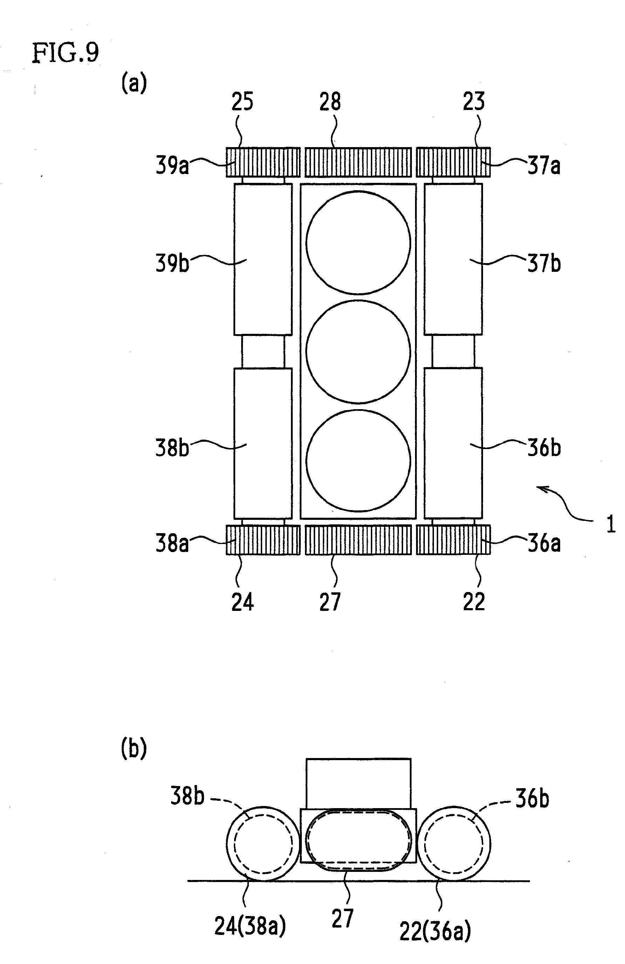

The embodiment shown in FIGS. 9(a) and 9(b) is a case in which the crawlers 27 and 28 are respectively disposed between outer peripheries of the wheels 22 and 24 and between those of wheels 23 and 25 so that the wheels 22 to 25 and the crawlers 27 and 28 do not overlap with each other in the robot width direction. That is, crawlers 27 and 28 as the left and right second travel units are disposed in a manner of being sandwiched by the first travel units 36a and 37a of the left and light front wheels 22 and 23, and the first travel units 38a and 39a of the left and right rear wheels 24 and 25. In this case, the crawlers 27 and 28 are driven by respective drive sources (motors) different from the drive sources (motors) for the wheels 22 to 25.

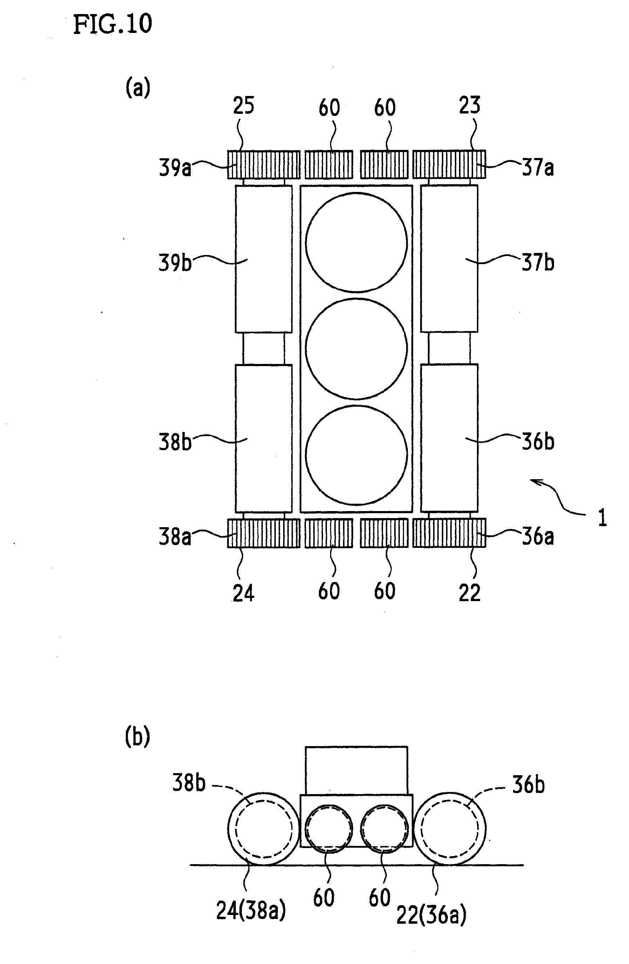

The embodiment shown in FIGS. 10(a) and 10(b) is a case in which a plurality of wheels 60 as the left and right second travel units are used in place of the crawlers 27 and 28 shown in FIGS. 9(a) and 9(b). That is, in the present embodiment, the plurality of wheels 60 is disposed in the front and rear direction of the robot body 2, thus all the travel units are configured by the wheels.

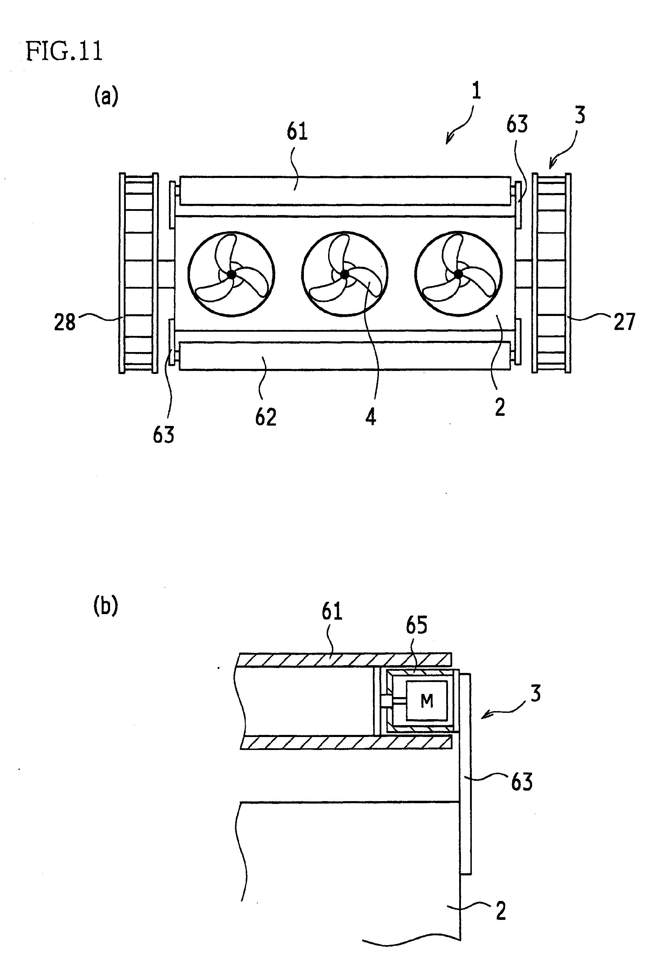

The embodiment shown in FIGS. 11(a) and 11(b) is a case in which the traveling device 3 is configured by the left and right crawlers 27 and 28 as the first travel units and front and rear rollers 61 and 62 as the second travel units. Specifically, an arm 63 is protrudedly disposed from a side of the robot body 2. To the arm 63, a hermetic container 65 is fixed. The submersible motor M is embedded in the hermetic container 65. The rotating shaft of the submersible motor M is fixed to one end of each of the rollers 61 and 62. The other end of each of the rollers 61 and 62 is supported by the arm 63 via a bearing.

The travel is performed by the left and right crawlers 27 and 28, and the lateral rope N1 can be passed over. Also, the travel can be performed by the rollers 61 and 62 along the longitudinal rope N2. Furthermore, since the drive sources (the submersible motors) of the crawlers 27 and 28 are different from the drive sources (the submersible motors) of the rollers 61 and 62, it is not necessary that the axis centers of the drive wheels of the crawlers 27 and 28 are the same as the axis centers of the rollers 61 and 62. The axis centers of the crawlers 27 and 28 may be different from the axis centers of the rollers 61 and 62.

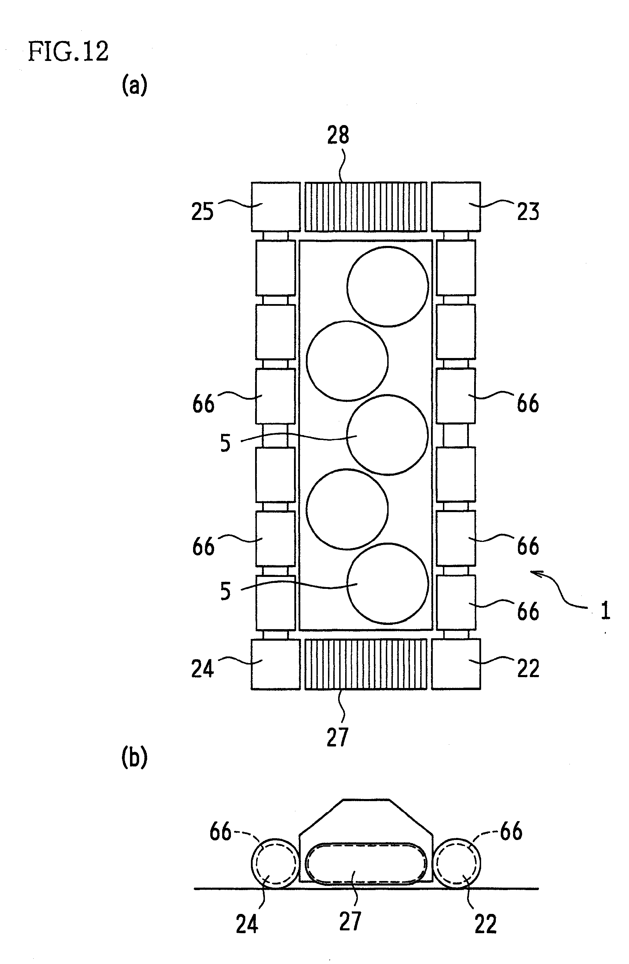

The embodiment shown in FIGS. 12(a) and 12(b) is a case in which the second travel units shown in FIGS. 9 are a plurality of wheels 66.

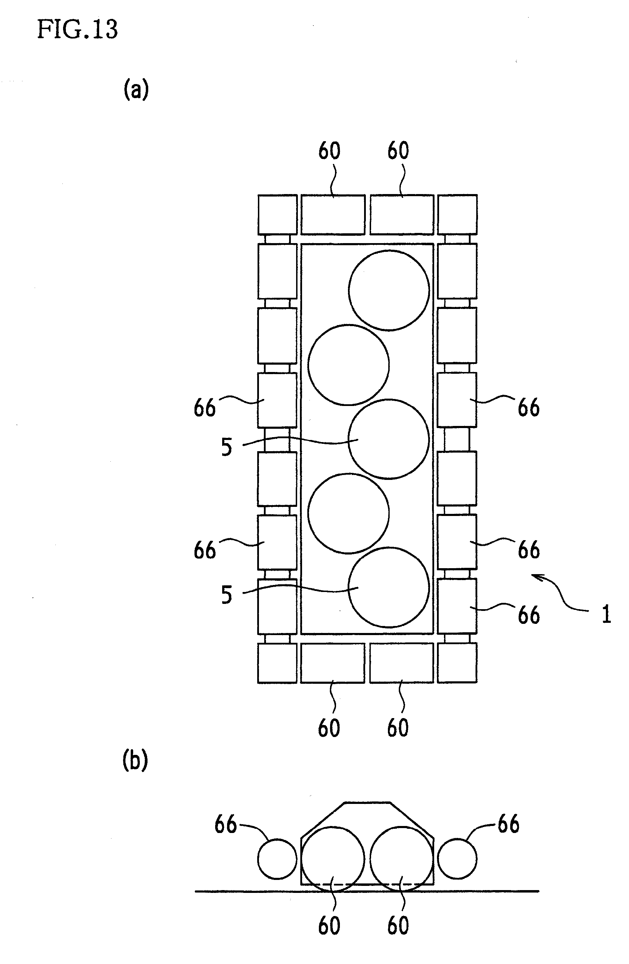

The embodiment shown in FIGS. 13(a) and 13(b) is a case in which the first travel units are constituted by the left and right front and rear wheels 60. Intervals of the front and rear wheels 60 are set to be narrow. Furthermore, the second travel units are constituted by a plurality of wheels 66 that are disposed in the front and rear directions of the front and rear wheels 60. The second travel units are continuously disposed in the left and right direction of the submersible cleaning robot 1.

In the configuration in which the second travel units are located higher than the lower ends of the first travel units, the case is shown in which each of the first travel units and the corresponding second travel unit are rotated about the same axis while the diameter of the second travel units is smaller than the diameter of the first travel units. However, the axis center of the first travel units and that of the second travel units may be different from each other. In this case, it is not necessary that the diameter of the second travel units is smaller than the diameter of the first travel units. The diameter of the second travel units may be the same as, or larger than, the diameter of the first travel units.

The cleaning nozzle unit 5 may be configured by a pair of horizontal extending pipes that extends in the horizontal direction from the rotating shaft 6 and the cleaning nozzles disposed at the tip portions of the horizontal extending pipes.

The propellers 4 may be configured to rotate in the same direction or to rotate respectively in the opposite directions.

It is not necessary to divide the robot body 2 into the nozzle side body 2A and the propeller side body 2B. The robot body 2 may have a configuration in which a part of the robot body 2 is opened to form the introduction space D.

### Industrial Applicability

The present invention is usefully applied to a submersible cleaning robot that cleans cleaning subject items such as aquaculture fish nets by jetting high-pressure water. Specifically, if there is a protrusion in the cleaning subject item such as an aquaculture fish net, the submersible cleaning robot can travel passing over the protrusion without getting tangled in the aquaculture fish net and the like, and thus a cleaning ability can be improved.

### Description of Reference Numerals

- 1: submersible cleaning robot
- 2: robot body
- 3: traveling device
- 4: propulsion force-generating propeller (propeller)
- 5: cleaning nozzle unit
- 22 to 25: wheels
- 27, 28: crawlers (endless tracks, second travel units)
- 30,31: shaft
- 32 to 35: cylindrical rotating bodies
- 36 to 39: tires
- 36a, 37a, 38a, 39a: first travel units
- 36b, 37b, 38b, 39b: second travel units
- L1: wheel width
- L2: first travel unit length
- L3: second travel unit length
- L4: distance between wheels
- N: aquaculture fish net

## Claims

1. A submersible cleaning robot (1) for cleaning a submerged cleaning subject item (N) by jetting high-pressure water from a cleaning nozzle (53) provided in a cleaning nozzle unit (5) toward a surface of the cleaning subject item (N) while moving along the surface of the cleaning subject item (N),
wherein the cleaning nozzle unit (5) is provided in a lower portion of a rotating shaft (6) rotatably supported by a robot body (2),
wherein a traveling device (3) is provided to move the robot body (2),
wherein the traveling device (3) includes first travel units (22-25; 27, 28; 36a-39a; 60) used for a normal travel provided at left and right sides of the robot body (2) and second travel units (22-25; 27, 28; 36b-39b; 60; 61, 62; 66) to pass over a protrusion of the cleaning subject item (N),
wherein the second travel units (22-25; 27, 28; 36b-39b; 60; 61, 62; 66) have a smaller diameter than the first travel units (22-25; 27, 28; 36a-39a; 60), wherein lower ends of the first travel units (22-25; 27, 28; 36a-39a; 60) are ground contact surfaces, and lower ends of the second travel units (22-25; 27, 28; 36b-39b; 60; 61, 62; 66) are located higher than the lower ends of the first travel units (22-25; 27, 28; 36a-39a; 60), and
wherein, a moving direction in which the submersible cleaning robot (1) moves linearly by the first travel units (22-25; 27, 28; 36a-39a; 60) is defined as a front and rear direction of the robot body (2), and a direction orthogonal to the front and rear direction is defined as a left and right direction of the robot body (2), wherein the first travel units and the second travel units are driven to rotate in the same direction, **characterised in that** the second travel units (22-25; 27, 28; 36b-39b; 60; 61, 62; 66) include front and rear second travel units that are provided in the robot body (2) in the front and rear direction so as to face the respective inner sides in the left and right direction of the robot body (2) compared to the first travel units (22-25; 27, 28; 36a-39a; 60).

2. A submersible cleaning robot (1) for cleaning a submerged cleaning subject item (N) by jetting high-pressure water from a cleaning nozzle (53) provided in a cleaning nozzle unit (5) toward a surface of the cleaning subject item (N) while moving along the surface of the cleaning subject item (N),
wherein the cleaning nozzle unit (5) is provided in a lower portion of a rotating shaft (6) rotatably supported by a robot body (2),
wherein a traveling device (3) is provided to move the robot body (2),
wherein the traveling device (3) includes first travel units (22-25; 27, 28; 36a-39a; 60) used for a normal travel provided at left and right sides of the robot body (2) and second travel units (22-25; 27, 28; 36b-39b; 60; 61, 62; 66) to pass over a protrusion of the cleaning subject item (N),
wherein an axis center of the first travel units (22-25; 27, 28; 36a-39a; 60) and that of the second travel units (22-25; 27, 28; 36b-39b; 60; 61, 62; 66) are different from each other, wherein lower ends of the first travel units (22-25; 27, 28; 36a-39a; 60) are ground contact surfaces, and lower ends of the second travel units (22-25; 27, 28; 36b-39b; 60; 61, 62; 66) are located higher than the lower ends of the first travel units (22-25; 27, 28; 36a-39a; 60), and
wherein a moving direction in which the submersible cleaning robot (1) moves linearly by the first travel units (22-25; 27, 28; 36a-39a; 60) is defined as a front and rear direction of the robot body (2), and a direction orthogonal to the front and rear direction is defined as a left and right direction of the robot body (2),
wherein the first travel units and the second travel units are driven to rotate in the same direction, **characterised in that** the second travel units (22-25; 27, 28; 36b-39b; 60; 61, 62; 66) include front and rear second travel units that are provided in the robot body (2) in the front and rear direction so as to face the respective inner sides in the left and right direction of the robot body (2) compared to the first travel units (22-25; 27, 28; 36a-39a; 60).

3. The submersible cleaning robot (1) according to claim 1, wherein a length of the front and rear second travel units (22-25; 27, 28; 36b-39b; 60; 61, 62; 66) in the left and right direction is set to be longer than a length of the first travel units (22-25; 27, 28; 36a-39a; 60) in the left and right direction.

4. The submersible cleaning robot (1) according to any of claims 1 to 3, wherein the second travel units (22-25; 27, 28; 36b-39b; 60; 61, 62; 66) include left and right second travel units that are provided at the left and right sides of the robot body (2).

5. The submersible cleaning robot (1) according to claim 4, wherein the left and right second travel units (22-25; 27, 28; 36b-39b; 60; 61, 62; 66) are constituted by respective endless tracks (27, 28).

6. The submersible cleaning robot (1) according to claim 4, wherein the left and right second travel units (22-25; 27, 28; 36b-39b; 60; 61, 62; 66) are constituted by a plurality of wheels (22, 23, 24, 25).

7. The submersible cleaning robot (1) according to any one of claims 1 to 6, wherein the front and rear second travel units (22-25; 27, 28; 36b-39b; 60; 61, 62; 66) are formed in a tapered shape so as to have a diameter that becomes smaller toward the center of the robot body (2).

8. The submersible cleaning robot (1) according to claim 5,
wherein axes of the first travel units (22-25; 27, 28; 36a-39a; 60) and the associated left and right second travel units (22-25; 27, 28; 36b-39b; 60; 61, 62; 66) that serve as the endless tracks (27, 28) are provided on the same axes (43, 44), and
wherein an external diameter of the first travel units (22-25; 27, 28; 36a-39a; 60) are set to be larger than an external diameter of the endless tracks (27, 28).

## Patentansprüche

1. Ein Unterwasserreinigungsroboter (1) zur Reinigung eines untergetauchten Reinigungsgegenstands (N) durch Ausstoßen von Hochdruckwasser aus einer Reinigungsdüse (53), welche in einer Reinigungsdüseneinheit (5) bereitgestellt ist, gegen eine Oberfläche des Reinigungsgegenstands (N), während sie sich entlang der Oberfläche des Reinigungsgegenstands (N) bewegt,
worin die Reinigungsdüseneinheit (5) in einem unteren Teil eines rotierenden Schaftes (6), der rotierbar durch einen Roboterkörper (2) unterstützt wird, angeordnet ist,
worin eine Bewegungsvorrichtung (3) bereitgestellt ist, um den Roboterkörper (5) zu bewegen,
worin die Bewegungsvorrichtung (3) erste Bewegungseinheiten (22-25; 27, 28; 36a-39a; 60) beinhaltet, die für eine normale Bewegung an den linken und rechten Seiten des Roboterkörpers (2) bereitgestellt sind, und zweite Bewegungseinheiten (22-25; 27, 28; 36b-39b; 60; 61, 62; 66), um einen Vorsprung des Reinigungsgegenstands (N) zu überwinden,
worin die zweiten Bewegungseinheiten (22-25; 27, 28; 36b-39b; 60; 61, 62; 66) einen kleineren Durchmesser haben als die ersten Bewegungseinheiten (22-25; 27, 28; 36a-39a; 60), worin die unteren Enden der ersten Bewegungseinheiten (22-25; 27, 28; 36a-39a; 60) Oberflächen für den Bodenkontakt sind, und untere Enden der zweiten Bewegungseinheiten (22-25; 27, 28; 36b-39b; 60; 61, 62; 66) höher angeordnet sind als die unteren Enden der ersten Bewegungseinheiten (22-25; 27, 28; 36a-39a; 60), und
worin eine Bewegungsrichtung, in welcher sich der Unterwasserreinigungsroboter (1) mittels der ersten Bewegungseinheiten (22-25; 27, 28; 36a-39a; 60) linear bewegt, definiert ist als eine vordere und hintere Richtung des Roboterkörpers (2), und eine Richtung orthogonal zu der vorderen und hinteren Richtung definiert ist als eine linke und rechte Richtung des Roboterkörpers (2), die zweiten Bewegungseinheiten (22-25; 27, 28; 36b-39b; 60; 61, 62; 66) vordere und hintere zweite Bewegungseinheiten beinhalten, welche in dem Roboterkörper (2) bereitgestellt sind in der vorderen und der hinteren Richtung, um den jeweiligen inneren Seiten in der linken und rechten Richtung des Roboterkörpers (2) verglichen mit den ersten Bewegungseinheiten (22-25; 27, 28; 36a-39a; 60) gegenüber zu liegen.

2. Ein Unterwasserreinigungsroboter (1) zur Reinigung eines untergetauchten Reinigungsgegenstands (N) durch Ausstoßen von Hochdruckwasser aus einer Reinigungsdüse (53), welche in einer Reinigungsdüseneinheit (5) bereitgestellt ist, gegen eine Oberfläche des Reinigungsgegenstands (N), während sie sich entlang der Oberfläche des Reinigungsgegenstands (N) bewegt,
worin die Reinigungsdüseneinheit (5) in einem unteren Teil eines rotierenden Schaftes (6), der rotierbar durch einen Roboterkörper (2) unterstützt wird, angeordnet ist,
worin eine Bewegungsvorrichtung (3) bereitgestellt ist, um den Roboterkörper (5) zu bewegen,
worin die Bewegungsvorrichtung (3) erste Bewegungseinheiten (22-25; 27, 28; 36a-39a; 60) beinhaltet, die für eine normale Bewegung an den linken und rechten Seiten des Roboterkörpers (2) bereitgestellt sind, und zweite Bewegungseinheiten (22-25; 27, 28; 36b-39b; 60; 61, 62; 66), um einen Vorsprung des Reinigungsgegenstands (N) zu überwinden,
worin ein Achsenzentrum der ersten Bewegungseinheiten (22-25; 27, 28; 36a-39a; 60) und das der zweiten Bewegungseinheiten (22-25; 27, 28; 36b-39b; 60; 61, 62; 66) voneinander verschieden sind, worin untere Enden der ersten Bewegungseinheiten (22-25; 27, 28; 36a-39a; 60) Oberflächen für den Bodenkontakt sind, und untere Enden der zweiten Bewegungseinheiten (22-25; 27, 28; 36b-39b; 60; 61, 62; 66) höher angeordnet sind als die unteren Enden der ersten Bewegungseinheiten (22-25; 27, 28; 36a-39a; 60), und
worin eine Bewegungsrichtung, in welcher sich der Unterwasserreinigungsroboter (1) mittels der ersten Bewegungseinheiten (22-25; 27, 28; 36a-39a; 60) linear bewegt, definiert ist als eine vordere und hintere Richtung des Roboterkörpers (2), und eine Richtung orthogonal zu der vorderen und hinteren Richtung definiert ist als eine linke und rechte Richtung des Roboterkörpers (2), die zweiten Bewegungseinheiten (22-25; 27, 28; 36b-39b; 60; 61, 62; 66) vordere und hintere zweite Bewegungseinheiten beinhalten, welche in dem Roboterkörper (2) bereitgestellt sind in der vorderen und der hinteren Richtung, um den jeweiligen inneren Seiten in der linken und rechten Richtung des Roboterkörpers (2) verglichen mit den ersten Bewegungseinheiten (22-25; 27, 28; 36a-39a; 60) gegenüber zu liegen.

3. Der Unterwasserreinigungsroboter (1) nach Anspruch 1, worin eine Länge der vorderen und hinteren zweiten Bewegungseinheiten (22-25; 27, 28; 36b-39b; 60; 61, 62; 66) in der linken und rechten Richtung länger eingestellt ist als eine Länge der ersten Bewegungseinheiten (22-25; 27, 28; 36a-39a; 60) in der linken und rechten Richtung.

4. Der Unterwasserreinigungsroboter (1) nach einem der Ansprüche 1 bis 3, worin die zweiten Bewegungseinheiten (22-25; 27, 28; 36b-39b; 60; 61, 62; 66) linke und rechte zweite Bewegungseinheiten beinhalten, welche an den linken und rechten Seiten des Roboterkörpers (2) bereitgestellt sind.

5. Der Unterwasserreinigungsroboter (1) nach Anspruch 4, worin die linken und rechten zweiten Bewegungseinheiten (22-25; 27, 28; 36b-39b; 60; 61, 62; 66) jeweils durch Endlosketten (27, 28) gebildet sind.

6. Der Unterwasserreinigungsroboter (1) nach Anspruch 4, worin die linken und rechten zweiten Bewegungseinheiten (22-25; 27, 28; 36b-39b; 60; 61, 62; 66) durch eine Vielzahl von Rädern (22, 23, 24, 25) gebildet sind.

7. Der Unterwasserreinigungsroboter (1) nach einem der Ansprüche 1 bis 6, worin die vorderen und hinteren zweiten Bewegungseinheiten (22-25; 27, 28; 36b-39b; 60; 61, 62; 66) in einer zugespitzten Gestalt gebildet sind, so dass sie einen Durchmesser haben, der in Richtung des Zentrums des Roboterkörpers (2) kleiner wird.

8. Der Unterwasserreinigungsroboter (1) nach Anspruch 5, worin die Achsen der ersten Bewegungseinheiten (22-25; 27, 28; 36a-39a; 60) und die assoziierten linken und rechten Bewegungseinheiten (22-25; 27, 28; 36b-39b; 60; 61, 62; 66), welche als die Endlosketten (27, 28) dienen, auf den gleichen Achsen (43, 44) bereitgestellt sind, und worin ein äußerer Durchmesser der ersten Bewegungseinheiten (22-25; 27, 28; 36a-39a; 60) größer eingestellt sind als ein äußerer Durchmesser der Endlosketten (27, 28).

## Revendications

1. Un robot de nettoyage sous l'eau (1) pour un objet submergé à nettoyer (N) grâce à un jet d'eau à haute pression venant d'une buse de nettoyage (53) installée dans une unité de buses de nettoyage (5) dirigée vers la surface de l'objet submergé à nettoyer (N) tandis qu'elle se déplace le long de la surface de l'objet submergé à nettoyer (N),
dans lequel l'unité de buses de nettoyage (5) est prévue dans une partie inférieure d'un arbre rotatif (6) supporté en rotation par le corps du robot (2),
dans lequel un dispositif de déplacement (3) est prévu pour déplacer le corps du robot (2),
dans lequel le dispositif de déplacement (3) comporte des premières unités de déplacement (22-25; 27, 28; 36a-39a; 60) utilisées pour un déplacement normal prévu sur les côtés gauche et droit du corps de robot (2) et des secondes unités de déplacement (22-25; 27, 28; 36b-39b; 60; 61, 62; 66) pour passer au-dessus d'une protubérance de l'objet submergé à nettoyer (N),
dans lequel les secondes unités de déplacement (22-25; 27, 28; 36b-39b; 60; 61, 62; 66) ont un diamètre plus petit que les premières unités de marche (22-25; 27, 28; 36a-39a; 60), où les extrémités inférieures des premières unités de déplacement (22-25; 27, 28; 36a-39a; 60) sont des surfaces de contact avec le sol et où les extrémités inférieures des secondes unités de déplacement (22-25; 27, 28; 36b-39b; 60; 61, 62; 66) sont situées plus haut que les extrémités inférieures des premières unités de déplacement (22-25; 27, 28; 36a-39a; 60), et
dans lequel la direction de mouvement selon laquelle le robot de nettoyage sous l'eau (1) se déplace linéairement le long des premières unités de déplacement (22-25; 27, 28; 36a-39a; 60) est définie comme les directions avant et arrière du corps du robot (2), et la direction perpendiculaire aux directions avant et arrière du corps du robot (2) est définie comme les directions gauche et droite du corps du robot (2), où les premières unités de déplacement et les secondes unités de déplacement sont entraînées à tourner dans la même direction,
**caractérisé en ce que** les secondes unités de déplacement (22-25; 27, 28; 36b-39b; 60; 61, 62; 66) comportent des secondes unités de déplacement avant et arrière qui sont prévues dans le corps du robot (2) dans les directions avant et arrière de manière à faire face aux faces internes respectives dans les directions gauche et droite du corps du robot (2) par rapport aux premières unités de déplacement(22-25; 27, 28; 36a-39a; 60).

2. Un robot de nettoyage sous l'eau (1) pour un objet submergé à nettoyer (N) grâce à un jet d'eau à haute pression venant d'une buse de nettoyage (53) installée dans une unité de buses de nettoyage (5) dirigée vers la surface de l'objet submergé à nettoyer (N) tandis qu'elle se déplace le long de la surface de l'objet submergé à nettoyer (N),
dans lequel l'unité de buses de nettoyage (5) est prévue dans une partie inférieure d'un arbre rotatif (6) supporté en rotation par le corps du robot (2),
dans lequel un dispositif de déplacement (3) est prévu pour déplacer le corps du robot (2),
dans lequel le dispositif de déplacement (3) comporte des premières unités de déplacement (22-25; 27, 28; 36a-39a; 60) utilisées pour un déplacement normal prévu sur les côtés gauche et droit du corps de robot (2) et des secondes unités de déplacement (22-25; 27, 28; 36b-39b; 60; 61, 62; 66) pour passer au-dessus d'une protubérance de l'objet submergé à nettoyer (N),
dans lequel le centre axial des premières unités de déplacement (22-25; 27, 28; 36a-39a; 60) et celui des secondes unités de déplacement (22-25; 27, 28; 36b-39b; 60; 61, 62; 66) sont différents l'un de l'autre, où les extrémités inférieures des premières unités de déplacement (22-25; 27, 28; 36a-39a; 60) sont des surfaces de contact avec le sol et où les extrémités inférieures des secondes unités de déplacement (22-25; 27, 28; 36b-39b; 60; 61, 62; 66) sont situées plus haut que les extrémités inférieures des premières unités de déplacement (22-25; 27, 28; 36a-39a; 60), et
dans lequel la direction de mouvement selon laquelle le robot de nettoyage sous l'eau (1) se déplace linéairement le long des premières unités de déplacement (22-25; 27, 28; 36a-39a; 60) est définie comme les directions avant et arrière du corps du robot (2), et la direction perpendiculaire aux directions avant et arrière du corps du robot (2) est définie comme les directions gauche et droite du corps du robot (2), où les premières unités de déplacement et les secondes unités de déplacement sont entraînées à tourner dans la même direction,
**caractérisé en ce que** les secondes unités de déplacement (22-25; 27, 28; 36b-39b; 60; 61, 62; 66) comportent des secondes unités de déplacement avant et arrière qui sont prévues dans le corps du robot (2) dans les directions avant et arrière de manière à faire face aux faces internes respectives dans les directions gauche et droite du corps du robot (2) par rapport aux premières unités de déplacement (22-25; 27, 28; 36a-39a; 60).

3. Le robot de nettoyage sous l'eau (1) selon la revendication 1, dans lequel la longueur des secondes unités de déplacement avant et arrière (22-25; 27, 28; 36b-39b; 60; 61, 62; 66) dans les directions gauche et droite est configurée de manière à être plus longue que la longueur des premières unités de déplacement (22-25; 27, 28; 36a-39a; 60) dans les directions gauche et droite.

4. Le robot de nettoyage sous l'eau (1) selon l'une des revendications 1 à 3, dans lequel les secondes unités de déplacement (22-25; 27, 28; 36b-39b; 60; 61, 62; 66) comportent des secondes unités de déplacement gauches et droites qui sont prévues sur les côtés gauche et droit du corps du robot (2).

5. Le robot de nettoyage sous l'eau (1) selon la revendication 4, où les secondes unités de déplacement gauches et droites (22-25; 27, 28; 36b-39b; 60; 61, 62; 66) sont formées de chenilles respectives (27, 28).

6. Le robot de nettoyage sous l'eau (1) selon la revendication 4, où les secondes unités de déplacement gauches et droites (22-25; 27, 28; 36b-39b; 60; 61, 62; 66) sont formées de plusieurs roues (22, 23, 24, 25).

7. Le robot de nettoyage sous l'eau (1) selon l'une des revendications 1 à 6, dans lequel les secondes unités de déplacement gauches et droites (22-25; 27, 28; 36b-39b; 60; 61, 62; 66) présentent une forme conique de manière à avoir un diamètre qui s'effile vers le centre du corps du robot (2).

8. Le robot de nettoyage sous l'eau (1) selon la revendication 5, dans lequel les axes des premières unités de déplacement (22-25; 27, 28; 36a-39a; 60) et les secondes unités de déplacement (22-25; 27, 28; 36b-39b; 60; 61, 62; 66) associées gauches et droites qui servent de chenilles (27,28) sont placées sur les mêmes axes (43,44), et
dans lequel le diamètre externe des premières unités de déplacement (22-25; 27, 28; 36a-39a; 60) est configuré de manière à être plus large que le diamètre externe des chenilles (27, 28).
